# EUROPEAN PATENT SPECIFICATION

(11) **EP 1 749 429 B1**
(45) Date of publication and mention of the grant of the patent: **16.01.2008**
(21) Application number: 06116926.4
(22) Date of filing: 10.07.2006
(51) Int. Cl.: A01D 34/416

(54) **Cutting element structure for garden trimmer**
Schneidelement für Gartenwerkzeug
Elément de coupe pour outil de jardin

(30) Priority: 03.08.2005 IT MI20050288 U
(43) Date of publication of application: 07.02.2007
(73) Proprietor: Guerra, Lauro, 42015 Correggio (RE) (IT)
(72) Inventor: Guerra, Lauro, 42015 Correggio (RE) (IT)
(74) Representative: Pesce, Michele

(56) References cited:
- WO-A-98/18312
- DE-C1- 19 817 883
- US-A- 5 791 054
- US-B1- 6 249 978
- US-B1- 6 715 270

## Description

The preset invention relates to so-called garden trimmers and more particularly to garden trimmers of the corded head type.

Garden trimmers are known devices for cutting grass, weeds and similar vegetation. They comprise a rotating head from which the two or more ends of a cord of suitable plastic material radially project symmetrically.

The head is rotatably supported at the end of a support and gripping structure, usually in the form of a bar, to the other end of which an internal combustion engine or electric motor is fixed.

US 6 249 978 and US 5 791 054 disclose garden trimmers according to the pre-characterising portion of claim 1.

The support structure encloses a device for transmitting rotary motion from the motor or engine shaft to the head and also comprises gripping means which enable the user to correctly grip the trimmer for its use.

Two groups of heads currently exits:
- a first group of heads in which the cord is wound about a spool with its ends radially projecting symmetrically therefrom through a bush;
- a second group of heads provided with a piece of cord retained by a ring nut coaxial to the head and fixable to this latter by screwing.

The bush presents peripheral slits through which the pieces of cord are inserted so that their ends project outwards, or holes provided with non-return catches.

As is well known to the user of trimmers provided with heads of the first group, one of the most annoying and frequent problems is that the two cord pieces projecting from the head, to form the part which materially cuts the vegetation when the head rotates, frequently break at the respective radial exit apertures.

From tests carried out it has been proved that the shearing of the cord at the head exit is due to fatigue. In this respect, by observing the phenomenon under stroboscopic light, it has been found that during trimmer operation the cord, which emerges essentially radially from the head, flexes continuously and irregularly in both directions about the radial direction of the head, through a maximum angle of about 180° (90° towards one side and 90° towards the other side about this radial direction).

It has also been verified that the cutting force discharges on the bush as a traction force, the consequent rubbing heating the cord until it melts, causing it to break.

The heads of the second group comprising cord pieces also present certain problems, and in particular:
- the cord pieces have round or square cross-sections of not inconsiderable dimensions (up to 4.2 millimetres) in order to increase their working life, this resulting in a considerable increase in noise and absorbed power;
- as they are rigidly fixed by compression, the cord pieces tend to break close to the ring nut, on which the entire cutting force is discharged on encountering rigid obstacles close to the head;
- the cord pieces are rather laborious to mount, requiring a tool to release the fixing nut.

The aim of the present invention is therefore to provide a cutting structure for a trimmer by which the said problems of the known art are eliminated.

Within the scope of this aim, specific objects are to provide a cutting structure which:
- prevents the cord breaking at the cord exit aperture in the head or considerably reduces the frequency of this phenomenon;
- enables the cord to be easily and quickly replaced without excessive force;
- limits noise;
- provides a higher cutting quality.
the technical aim, together with these and further objects, are attained according to the invention by providing a cutting element structure for garden trimmer in accordance with the accompanying claims.

Further characteristics and advantages will be more apparent from the description of a preferred but non-exclusive embodiment of the cutting element structure for a garden trimmer according to the invention, illustrated by way of non-limiting example in the accompanying figures, in which:
Figure 1 is a coaxial section through a garden trimmer head provided with a cutting structure of the invention, and with a cutting element shown at a stage during its extraction from the head;
Figure 2 shows the next stage during the extraction of the cutting element after Figure 1;
Figure 3 shows a cutting element of the invention during its insertion into a garden trimmer head;
Figure 4 shows a garden trimmer head provided with a cutting structure of the invention;
Figure 5 is a perspective view of the trimmer head with the cutting elements applied;
Figures 6, 7, 8, 9 show four different embodiments of a cutting element of the invention; and
Figures 10-25 show different cross-sectional forms for the elongate elements or arms of the cutting elements according to the invention.

With reference to said figures, these show a cutting structure for a garden trimmer.

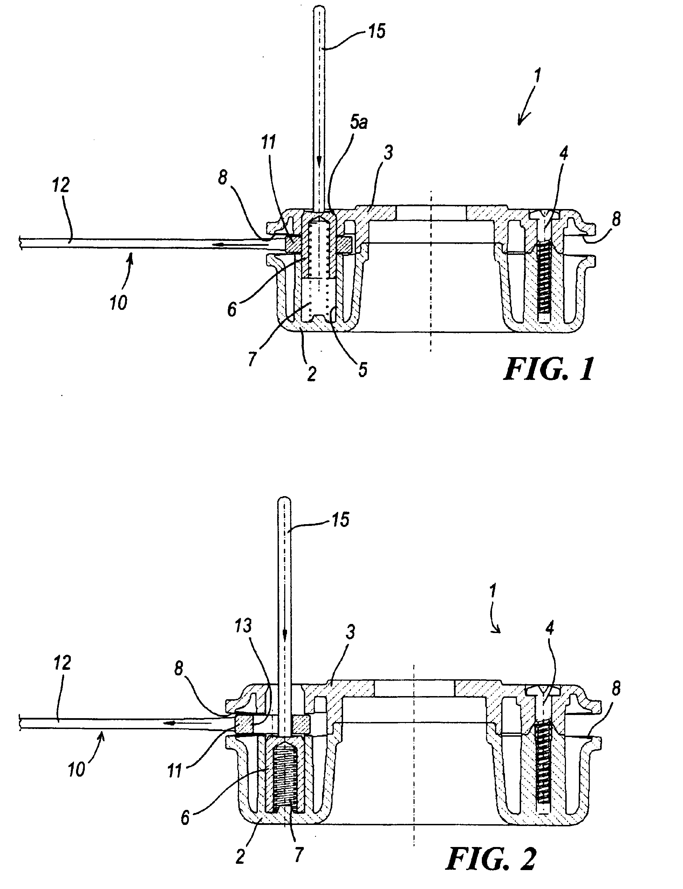

Specifically, Figures 1-5 show a garden trimmer head provided with said cutting structure and indicated overall by the reference numeral 1.

The trimmer head 1 comprises a first casing 2 to which a second casing 3 is fixed by screws 4.

The first casing 2 presents recessed seats 5 into each of which a pin 6 is slidably inserted, movable against and by the action of a spring 7.

Each seat 5 presents a converging (at 5a) free end defining a limit stop for the pin 6.

In addition, the casings 2, 3 laterally define apertures 8 through which pass the cutting elements 10, which are housed in the seat 5 and project from it.

In different embodiments, one, two, three, four or even more cutting elements 10 can project from the trimmer head.

The cutting elements 10 comprise a body 11 connectable to the trimmer head 1.

The body 11 has an annular structure and presents a circular through hole 13 for receiving the trimmer locking pin 6.

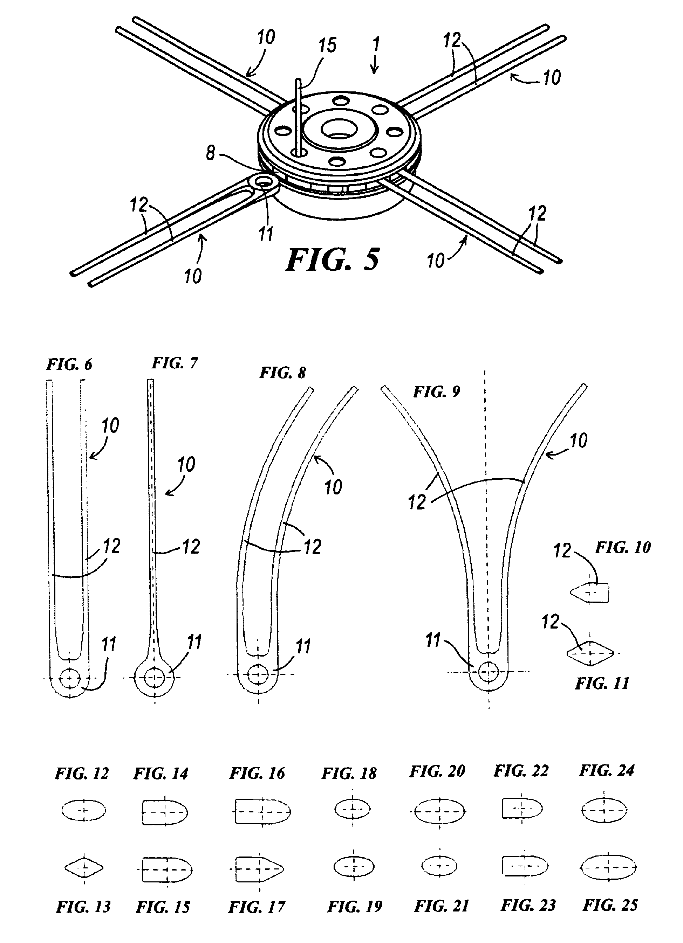

In addition, as shown in Figures 6-9, there can extend from the body 11 a single elongate element or flexible arm 12 or, in other examples, a pair of elongate elements or flexible arms 12 disposed in a plane perpendicular to the rotation pin, and which can be rectilinear and parallel, or curved in the same direction (Figure 8), or divergent (Figure 9), or convergent (arrangement not shown).

In a different example, the elongate elements of each cutting element are four in number, lying in pairs in relative spaced-apart planes perpendicular to the axis of the respective rotation pin.

Advantageously the elongate element or arm or arms of the cutting element 10 have that axis on which the body is pivoted to the trimmer head parallel to the axis of rotation of the head.

The elongate elements or arms present a substantially elliptical or ovoidal or ellipsoidal cross-section, or a cross-section otherwise compressed in the direction of the pivoting pin, to narrow from the pivoted body towards their free end, so that it more easily cuts through the air; other cross-sectional forms (Figures 10-25) can also be used.

The body 11 and the cutting element 12 are moulded in one piece from plastic material such as nylon; they also present elastic characteristics which enable them to bend, so limiting risks of breakage.

The operation of the cutting element of the invention is apparent from that described and illustrated and is substantially the following.

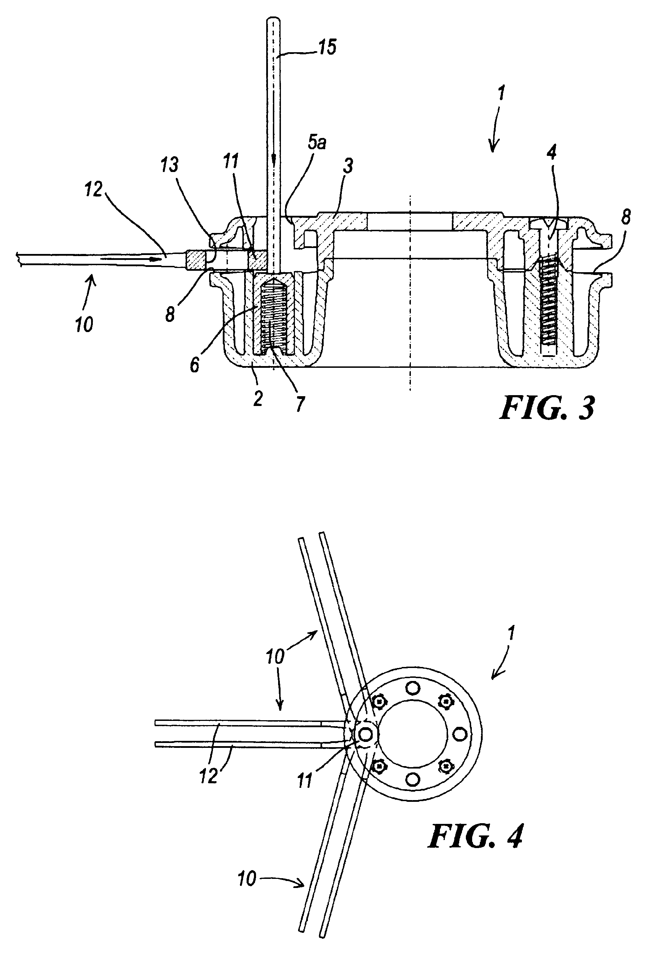

It is mounted in the trimmer head (Figure 3) by pressing, with a tool 15, the pin 6 so that it enters the seat 5, then inserting the element 10 (specifically the body 11) as far as above the pin 6, then withdrawing the tool 15 such that the through hole 13 corresponds with the pin 6, so that when the pin 6 returns to its rest position, it becomes inserted through the hole 13.

Extraction is achieved by pressing the pin 6 with the tool 15 so that the pin 6 withdraws from the through hole 13 and the body 11 mounts the pin 6, after which the tool 15 is withdrawn and the element 10 extracted.

Advantageously, during operation the fact that the particular section through the elongate elements or arms of the cutting element is compressed in the direction of the axis of the pin 6 means that the cutting element produces less noise than cutting elements of the known art.

Moreover, during rotation the cutting element is pivoted on the pin 6 and can slip relative thereto (while rotating). This limits the forces within the elongate elements or arms of the cutting element, hence limiting their breakage close to the head when they encounter rigid obstacles.

By virtue of the particular structure and the particular connection system, the cutting element of the invention can be in the form of elongate elements or arms which are very thin in the direction of the pin 6. In addition to reducing the noise which they generate during rotation, this also enables the vegetation to be very precisely cut (in terms of quality).
Different embodiments of the cutting element are possible. For example, in a different embodiment the body 11 is in the form of two shells connected together by screws or snap hooks. The two shells are provided with seats to receive and retain the elongate elements or flexible arms 12.
In practice it has been found that garden trimmer cutting structure of the present invention enables cutting elements to be provided which are resistant to tearing, of low noise, and have thin elongate elements or arms which are precise in their cutting.

In practice the materials used and their dimensions can be chosen at will in accordance with requirements and the state of the art.

## Claims

1. Garden trimmer having at least a cutting element structure comprising one or more elongate cutting elements (10) of corded type, **characterised in that** at one of their ends said elongate elements present a body (11) pivotable to a single axis of the trimmer head (1), wherein the axis on which the body (11) is pivoted to the garden trimmer head (1) is parallel to the axis of rotation of the head.

2. Garden trimmer as claimed in the preceding claim, wherein the pivotable body (11) presents a through hole (13) into which a relative pin (6) can be inserted for pivoting the head to the trimmer.

3. Garden trimmer as claimed in one or more of the preceding claims, wherein the flexible elongate elements (10) have a cross-section the shape of which is compressed in the direction of the pivoting pin (6).

4. Garden trimmer as claimed in one or more of the preceding claims, wherein the cross-section through the flexible elongate elements (10) narrows from the pivotable body towards their free end.

5. Garden trimmer as claimed in one or more of the preceding claims, wherein the cross-section through the pivoting elongate elements (10) is ovoidal or ellipsoidal.

6. Garden Trimmer as claimed in one or more of the preceding claims, wherein the flexible elongate elements (10) of the cutting elements are substantially parallel.

7. Garden trimmer as claimed in one or more of the preceding claims, wherein the flexible elongate elements (10) are rectilinear.

8. Garden trimmer as claimed in one or more of the preceding claims, wherein the flexible elongate elements (10) are curved.

9. Garden trimmer as claimed in one or more of the preceding claims, wherein the pivotable body (11) of the cutting elements (10) and the relative elastic elongate elements (12) form one piece.

10. Garden trimmer as claimed in one or more of the preceding claims, wherein the cutting elements (10) are made of plastic material.

11. Garden trimmer as claimed in one or more of the preceding claims, wherein the plastic material forming the cutting elements (10) is nylon.

12. Garden trimmer as claimed in one or more of the preceding claims, wherein the elongate elements (12) of the cutting elements (10) are one or more in number, disposed in a plane perpendicular to the rotation pin.

13. Garden trimmer as claimed in one or more of the preceding claims, wherein the elastic elongate elements (12) of each cutting element (10) are four in number, lying in pairs in relative spaced-apart planes perpendicular to the axis of the relative rotation pin.

14. Garden trimmer as claimed in one or more of the preceding claims, wherein the elongate elements (12) present elastic characteristics.

15. Garden trimmer as claimed in one or more of the preceding claims, wherein the body (11) is formed as two shells fixable together and provided with seats to receive and retain the elongate elements or flexible arms.

## Patentansprüche

1. Garten-Trimmer mit zumindest einer Schneidvorrichtung, die eine oder mehrere längliche Schneidelemente (10) des Schnurtyps aufweist,
**dadurch gekennzeichnet,**
**dass** die länglichen Schneidelemente an einem ihrer Enden einen um eine Achse des Trimmerkopfes (1) schwenkbaren Körper (11) aufweisen und dass die Achse, um die der Körper (11) verschwenkbar um den Garten-Trimmerkopf (1) ist, parallel zur Rotationsachse des Kopfes verläuft.

2. Garten-Trimmer nach dem vorhergehenden Anspruch, wobei der schwenkbare Körper (11) ein Durchgangsloch (13) aufweist, in welches ein Stift (6) für die Schwenklagerung am Trimmerkopf einsteckbar ist.

3. Garten-Trimmer nach einem der vorhergehenden Ansprüche, wobei die flexiblen länglichen Elemente (10) einen Querschnitt aufweisen, der in Richtung des Schwenk-Stiftes (6) gestaucht ist.

4. Garten-Trimmer nach einem oder mehreren der vorhergehenden Ansprüche, wobei der Querschnitt der flexiblen länglichen Elemente (10) sich von dem schwenkbaren Körper (11) in Richtung zum freien Ende hin verjüngt.

5. Garten-Trimmer nach einem oder mehreren der vorhergehenden Ansprüche, wobei der Querschnitt durch die schwenkbaren länglichen Elemente (10) eiförmig oder elliptisch ist.

6. Garten-Trimmer nach einem oder mehreren der vorhergehenden Ansprüche, wobei die flexiblen länglichen Elemente (10) der Schneidelemente im Wesentlichen parallel zueinander sind.

7. Garten-Trimmer nach einem oder mehreren der vorhergehenden Ansprüche, wobei die flexiblen länglichen Elemente (10) geradlinig verlaufen.

8. Garten-Trimmer nach einem oder mehreren der vorhergehenden Ansprüche, wobei die flexiblen länglichen Elemente (10) gebogen sind.

9. Garten-Trimmer nach einem oder mehreren der vorhergehenden Ansprüche, wobei der schwenkbare Körper (11) der Schneidelemente (10) und die relativ elastischen länglichen Elemente (12) einstückig ausgebildet sind.

10. Garten-Trimmer nach einem oder mehreren der vorhergehenden Ansprüche, wobei die Schneidelemente (10) aus Kunststoff bestehen.

11. Garten-Trimmer nach einem oder mehreren der vorhergehenden Ansprüche, wobei der die Schneidelemente (10) bildende Kunststoff Nylon ist.

12. Garten-Trimmer nach einem oder mehreren der vorhergehenden Ansprüche, wobei die länglichen Elemente (12) der Schneidelemente (10) einzeln oder mehrfach ausgebildet sind und in einer Ebene senkrecht zum Rotationsstift verlaufen.

13. Garten-Trimmer nach einem oder mehreren der vorhergehenden Ansprüche, wobei die elastischen länglichen Elemente (12) jedes Schneidelementes (10) in vierfacher Zahl vorliegen und paarweise in voneinander beabstandeten Ebenen senkrecht zur Achse des Rotationsstiftes liegen.

14. Garten-Trimmer nach einem oder mehreren der vorhergehenden Ansprüche, wobei die länglichen Elemente (12) elastische Eigenschaften aufweisen.

15. Garten-Trimmer nach einem oder mehreren der vorhergehenden Ansprüche, wobei der Körper (11) aus zwei Gehäuseteilen besteht, die miteinander verbindbar sind und Sitze zur Aufnahme und Halterung der länglichen Elemente oder flexiblen Arme aufweisen.

## Revendications

1. Dispositif de coupe pour jardin ayant au moins une structure d'éléments coupants, comportant un ou plusieurs éléments coupants allongés (10) de type corde, **caractérisé en ce qu'**à une première de leurs extrémités, lesdits éléments allongés présentent un corps (11) pouvant pivoter sur un axe unique de la tête de dispositif de coupe (1), dans lequel l'axe sur lequel le corps (11) est pivoté par rapport à la tête de dispositif de coupe pour jardin (1) est parallèle à l'axe de rotation de la tête.

2. Dispositif de coupe pour jardin selon la revendication précédente, dans lequel le corps pivotant (11) présente un trou traversant (13) dans lequel une broche relative (6) peut être insérée pour pivoter la tête par rapport au dispositif de coupe.

3. Dispositif de coupe pour jardin selon l'une quelconque des revendications précédentes, dans lequel les éléments allongés souples (10) ont une coupe transversale dont la forme est comprimée dans la direction de la broche de pivotement (6).

4. Dispositif de coupe pour jardin selon l'une quelconque des revendications précédentes, dans lequel la coupe transversale à travers les éléments allongés souples (10) rétrécit depuis le corps pivotant vers leur extrémité libre.

5. Dispositif de coupe pour jardin selon l'une quelconque des revendications précédentes, dans lequel la coupe transversale à travers les éléments allongés pivotants (10) est de forme ovoïde ou ellipsoïde.

6. Dispositif de coupe pour jardin selon l'une quelconque des revendications précédentes, dans lequel les éléments allongés souples (10) des éléments coupants sont sensiblement parallèles.

7. Dispositif de coupe pour jardin selon l'une quelconque des revendications précédentes, dans lequel les éléments allongés souples (10) sont rectilignes.

8. Dispositif de coupe pour jardin selon l'une quelconque des revendications précédentes, dans lequel les éléments allongés souples (10) sont incurvés.

9. Dispositif de coupe pour jardin selon l'une quelconque des revendications précédentes, dans lequel le corps pivotant (11) des éléments coupants (10) et les éléments allongés élastiques relatifs (12) forment une seule pièce.

10. Dispositif de coupe pour jardin selon l'une quelconque des revendications précédentes, dans lequel les éléments coupants (10) sont réalisés en matière plastique.

11. Dispositif de coupe pour jardin selon l'une quelconque des revendications précédentes, dans lequel la matière plastique formant les éléments coupants (10) est du Nylon (nom commercial déposé).

12. Dispositif de coupe pour jardin selon l'une quelconque des revendications précédentes, dans lequel les éléments allongés (12) des éléments coupants (10) sont un ou plusieurs en nombre, disposés dans un plan perpendiculaire à la broche de rotation.

13. Dispositif de coupe pour jardin selon l'une quelconque des revendications précédentes, dans lequel les éléments allongés élastiques (12) de chaque élément coupant (10) sont au nombre de quatre, disposés par paire dans les plans espacés relatifs perpendiculaires à l'axe de la broche de rotation relative.

14. Dispositif de coupe pour jardin selon l'une quelconque des revendications précédentes, dans lequel les éléments allongés (12) présentent des caractéristiques élastiques.

15. Dispositif de coupe pour jardin selon l'une quelconque des revendications précédentes, dans lequel le corps (11) est formé sous la forme de deux coques pouvant être fixées ensemble, et est muni de sièges pour recevoir et retenir les éléments allongés ou les bras souples.
